# EUROPEAN PATENT SPECIFICATION

(11) **EP 1 304 895 B1**
(45) Date of publication and mention of the grant of the patent: **13.12.2006**
(21) Application number: 02023133.8
(22) Date of filing: 15.10.2002
(51) Int. Cl.: H04Q 7/34, H04B 17/00

(54) **Transceivers and method for use in radio communications**
Sende-Empfänger und Verfahren zur Verwendung in Funkkommunikation
Emetteurs-récepteurs et procédé à utiliser dans des communications radio

(30) Priority: 17.10.2001 GB 0124888
(43) Date of publication of application: 23.04.2003
(73) Proprietor: MOTOROLA, INC., Schaumburg, IL 60196 (US)
(72) Inventor: Shahaf, Mark, Ashdod, Israel 77642 (IL); Carmon, Rafael, Rishon Lezion 75676 (IL); Serfaty, Salomon, Doar Gaash, Israel 60951 (IL)
(74) Representative: McCormack, Derek James

(56) References cited:
- WO-A-97/33447
- US-A- 5 768 688
- US-A- 5 845 209
- US-A- 5 898 921
- US-A- 5 995 811

## Description

### FIELD OF THE INVENTION

The present invention relates to transceivers and a method of operating them for use in radio communications, especially mobile communications.

### BACKGROUND OF THE INVENTION

Mobile radio transceivers are also referred to herein as mobile stations (MSs). The terms 'mobile transceiver' and 'mobile station (MS)' are intended to include within their meaning mobile and portable telephones and mobile and portable radios and the like. Systems which provide communications to or from MSs by fixed or base transceivers known in the art as 'base transceiver stations' or 'BTSs' and arranged to give coverage in a network of regions known as cells are referred to herein as cellular radio communications systems. The present invention relates specifically to base transceivers for use in such systems as well as to MSs for use in such systems and to methods of operating such transceivers.

Subscribers to cellular communication systems having MSs generally require a high grade of service and reliable connection whilst using the system for various services including telephony calls, dispatch calls and data transfers and possibly more advanced communications such as to transmit video images. In this specification the expression 'subscriber' includes members of a user group who are collectively permitted to use the system, e.g. because they belong to a common company or organisation for whose benefit the system is operated, as well as individuals who subscribe directly to an operator of the system.

Any wireless link is a potential target for interference generated either intentionally (hostile activity) known also as jamming or accidentally. The risk of accidental interference may be increased by the coexistence of different systems or devices in the same area sharing the same (or a close) frequency. Moreover, in a cellular communication system or network, accidental interference can be caused by an inappropriate frequency re-use strategy or by unusual propagation conditions.

In a cellular communication system, a frequency division duplex (FDD) protocol is often used for communications between a BTS and the MSs served by it. Signals sent from the BTS to the MSs are in a first frequency channel which is known as the downlink channel and, at the same time, signals from MSs to the BTS are in a second frequency channel known as the uplink channel. The channel providing the more sensitive communication link is the downlink channel which is also known as the control channel or paging channel. Every service is established using information exchange on the downlink channel, such as call setup, message delivery, and more. In the event that the downlink channel is blocked by interference (jammed), no service can be provided. The risk of jamming of the downlink channel is increased because the transmission by a BTS is substantially continuous on the downlink channel and therefore can be easily detected and analysed by receiving devices being used in a hostile jamming activity. In contrast, on the uplink channel in general there is no continuous transmission, and transmission is performed by MSs only when a service request has been applied by the user.

In the prior art sending a test signal by a base station to a distant subscriber unit and detecting a response by the subscriber unit is known. An arrangement using such a procedure is described in US-A-5,898,921. A test message is issued by a subscriber network element and is sent individually to each individual subscriber unit via its serving base station. The network element also receives any response message sent by the subscriber unit. The procedure is disclosed as being primarily for use in detecting malfunctions of subscriber units in a WLL (wireless local loop) system. Sending test signals to detect downlink interference by jamming is not disclosed or suggested in this reference.

US-A-5,845,209 describes a system and a method in which interference monitor stations in a service zone of a base station (BS) are provided for detecting interference of a (downlink) signal sent from the BS. The monitor stations are fixed in position and are selectively distributed in the zone and are wired to the BS. The monitor stations are dedicated to operate continuously to monitor for interference to a signal sent by the BS. The signal from the BS which is employed by the monitor stations for interference detection is a normal control signal including a colour code sent continuously by the BS to MSs to identify the BS. The colour code is a known data pattern and interference is detected by errors in the known data pattern by the interference monitor station. Provision and continuous operation of the monitor stations in such a system and method is unduly costly.

### SUMMARY OF THE PRESENT INVENTION

According to the present invention in a first aspect there is provided base transceiver for use in radio communication with distant transceiver units, the base transceiver being operable to send to the distant transceiver units a test signal to test whether the test signal is received by the distant transceiver units, characterised in that the base transceiver is operable to put itself periodically into an interference detection mode to detect for interference by jamming of a downlink radio transmission from the base transceiver and actively to take part in the interference detection mode by being operable: (i) to generate and send on a control channel by polling to all mobile stations camped on the control channel a test signal which the mobile stations are programmed to recognise and respond to; (ii) to sense whether or not a response signal is received from any of the mobile stations in response to receipt of the test signal; and (iii) if no response signal is detected, optionally after further investigation, to generate an interference detection signal to indicate that interference to the downlink transmission has been detected.

The base transceiver may be incorporated in a base transceiver station (BTS) and may be part of a cellular network including a plurality of BTSs and a network controller.

The base transceiver preferably is operable to detect a time interval when there is no incoming signal from the distant transceiver(s) on an uplink channel and to initiate the interference detection mode in such a detected time interval.

The base transceiver includes means for sensing a response signal sent in response to its test signal. The means for sensing may operate in a known manner for example it may be operable to detect whether a signal is received after an expected response time and/or whether received signal energy is above a threshold energy. Alternatively, or in addition, the response signal may be a signal coded to be recognised as a response signal. Where the base transceiver detects that a response signal has been received it proceeds to operate normally until the next interference detection mode has to be applied after a suitable period.

A suitable period will be chosen by the system operator. What constitutes a suitable period can vary significantly according to the number of users of the system, their distribution across the system, their activity characteristics, and more. The period may be variable and configurable by the operator according to those considerations and even activated differently on a per site basis, e.g. from a central control. The activation could for example be based on the fact that a base transceiver has performed a certain number of unsuccessful pages to several subscribers, or that for a certain time period it has not received any requests from subscribers on the uplink (inbound) channel.

Where the base transceiver detects in its interference detection mode that a response signal is not received, one of several possible conditions may apply, e.g. as follows: (i) a fault is occurring in the downlink transmitter causing substantial noise to be present in the transmitted downlink signal; or (ii) the downlink transmission has been subject to interference or (ii) no distant transceiver has received the transmitted test signal. The base transceiver may not distinguish between these conditions and may automatically generate an interference detection signal. However, the base transceiver may be operable to carry out a further investigation, optionally at the same time as generating an interference detection signal, to distinguish between these possible conditions as follows.

The base transceiver may be operable to issue an auxiliary control signal to a receiver to initiate identification of the interference level on the downlink channel. The receiver may be the receiving part of the transceiver itself. Alternatively, or in addition, the receiver may be an auxiliary interference detection unit provided in a location to detect transmitted signals from the base transceiver.

Where the said receiver comprises part of the base transceiver itself, the receiver on receiving the auxiliary control signal may be operable to be tuned to the frequency of the downlink channel, e.g. for a short detection period. The receiver then may be operable in one of the following ways.

Firstly, the receiver of the base transceiver may be operable to sense the station's own transmission for a short time period to measure noise level in the transmitting (outbound) channel.

Secondly, the base transceiver may be operable to detect whether a received signal is different from that transmitted by the transceiver, e.g. contains signal or noise produced by interference.

To co-incide with the state in which its receiver is set to be tuned to the downlink channel frequency, the base transceiver may cease its downlink transmission for a short time period to identify whether any interference level on the channel is above a given predetermined threshold, e.g. measured as received signal or noise energy. The time period should be short enough to avoid confusion of any MSs which are (i) operating on the same channel of neighbouring BTSs and/or (ii) measuring periodically signals from this base transceiver for a potential handover and sufficient for an accurate channel sensing. The precise time interval employed for this downlink channel sensing state will depend on the system and the conditions employed in it. For a TETRA system having approximately 14.12msec timeslots a typical suitable time period will be 1 to 4 timeslots. Other time periods will be appropriate in other systems a will appreciated by those skilled in the art.

The interference detection signal produced by the base transceiver may be sent to a system controller. Depending on the type of system, the system controller may be associated with the transceiver, e.g. in a common installation, or in a remote installation. The signal may be sent electrically, by radio communication or some other suitable form of communication, again depending on the mutual arrangement of the base transceiver and the system controller.

The system controller, upon receiving the interference detection signal, may be operable to send a control signal to the base transceiver to change one of its operating parameters to avoid the apparent interference. For example, in response to such a signal from the system controller, the base transceiver may be operable to change its downlink channel to a different operating frequency.

According to the present invention in a second aspect there is provided a method of operation of a system for radio communication between a base transceiver described heretofore and a plurality of mobile stations, wherein the base transceiver puts itself periodically into an interference detection mode to detect for interference by jamming of a downlink radio transmission from the base transceiver and actively takes part in the interference detection mode by applying the following steps: (i) sending on a control channel by polling to all mobile stations camped on the control channel a test signal which the mobile stations are programmed to recognise and respond to; (ii) sensing whether or not a response signal is received from any of the mobile stations in response to receipt of the test signal; and (iii) if no response signal is detected, optionally after further investigation, generating an interference detection signal to indicate that interference to the downlink transmission has been detected.

In the method according to the second aspect wherein at least one of the mobile stations is camped on the control channel, if the mobile station receives the test signal, it is programmed to recognise and respond to the test signal and to send a response signal on an uplink channel in response to the test signal.

According to the present invention in a third aspect there is provided a mobile station for use as the at least one mobile station in the method according to the second aspect.

The base transceiver and the mobile station according to the first and third aspects of the invention and the method according to the second aspect may operate using a time division multiple access (TDMA) protocol. For example, the base transceiver, the mobile station and the method may operate according to TETRA (Terrestrial Trunked Radio) standards as specified by the ETSI (European Telecommunications Standards Institute). In the latter case the test signal and response signal may be sent in so called Layer 2 control signalling of TETRA systems.

UK Patent Application GB-A-2098427A and JP-A- 05-103368 describe arrangements in which there is a test mobile station in the field that tries to check whether a trunking or cellular system is working properly by issuing a channel request on the control channel of the base station and monitoring whether or not the channel is granted. In use of the present invention, the situation is reversed. It is the base transceiver that performs a sanity check on the channel and not a test mobile station, as specified earlier. By the invention, mobile stations may be polled by the base transceiver. These stations can be any of the mobile stations that are 'camped' at that time on the control channel of the system. There is no specific requirement for a test mobile station to perform the polling operation. The mobile stations polled are programmed to recognize the message from the base station and respond accordingly.

Beneficially, the invention allows actual or potential unwanted interference of a transmission on a downlink channel sent by a base transceiver to be detected quickly and for the operation of the base transceiver to be changed to avoid the interference. This allows good radio communications to be maintained with mobile stations served by the base transceiver despite the interference. Since it is the base transceiver that performs the sanity check, it can have complete knowledge of activity in the channel. By using mobile stations that are in the coverage area, assuming that statistically they are uniformly distributed around this coverage area, we overcome a problem in the prior art. If the test mobile station in the prior art is close to the base transceiver and the base transceiver's sensitivity happens to be degraded by some anomaly or malfunction, the base transceiver may still be able to decode messages from the test mobile station while unable to decode messages from distant mobile stations. Thus, the check signal generated may be a false one.

The invention can be applied as a two-step method to discover if the downlink frequency of the control channel is being jammed. In the first step, one of the mobile stations in the coverage area is polled and if there is no success, the base transceiver can be tuned to the frequency of the downlink control channel for a brief period of time. The first step avoids performing the second step when no jamming is present as this second step is a disruptive step. In the second step, the base transceiver could find out whether the jamming is due to noise, interference from another base station, etc.,in the manner described later.

Embodiments of the present invention will now be described by way of example with reference to the accompanying drawings, in which:

### BRIEF DESCRIPTION OF THE ACCOMPANYING DRAWINGS

Figure 1 is block schematic diagram of a system employing transceivers and a method of operation embodying the present invention.
Figure 2 is a block schematic diagram which is a flowsheet of a method of use of the system shown in Figure 1.

### DESCRIPTION OF EMBODIMENTS OF THE INVENTION

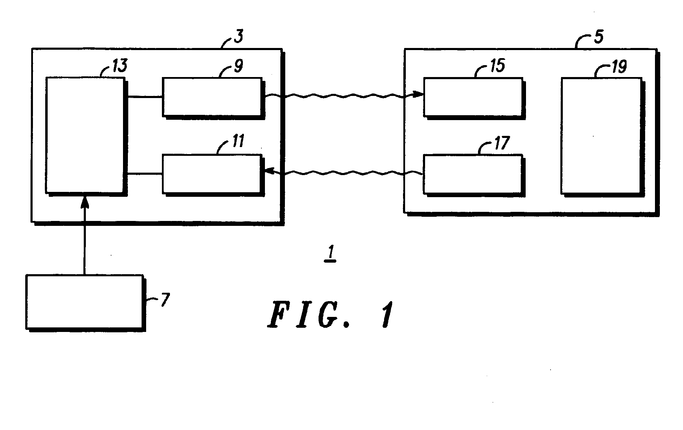

As shown in Figure 1, a mobile communication system 1 includes a base transceiver or BS 3 and a plurality of mobile stations one of which, a mobile station or MS 5 is shown. The MS 5 is in radio communication with the BS 5. The system 1 also includes a system controller 7 operably connected to the BS 3.

The BS 3 includes a transmitter 9, a receiver 11 and a processor 13. The transmitter 9 sends signals to the MS 5 and other mobile stations on a downlink channel and receives signals from the MS 5 and other mobile stations on an uplink channel. The MS 5 receives signals from the BS 3 on the downlink channel and sends signals to the BS 3 on the uplink channel. The processor 13 provides amongst other things control and user information inputs to the transmitter 9 and receives incoming information from the receiver 11. Likewise, The processor 19 provides amongst other things control and user information inputs to the transmitter 17 and receives incoming information from the receiver 15.

The BS 3 is controlled by the system controller 7. Communications to the BS 3 from the controller 7 and to the controller 7 from the BS 3 are sent to and from the processor 13 which provides operational intelligence within the BS 3.

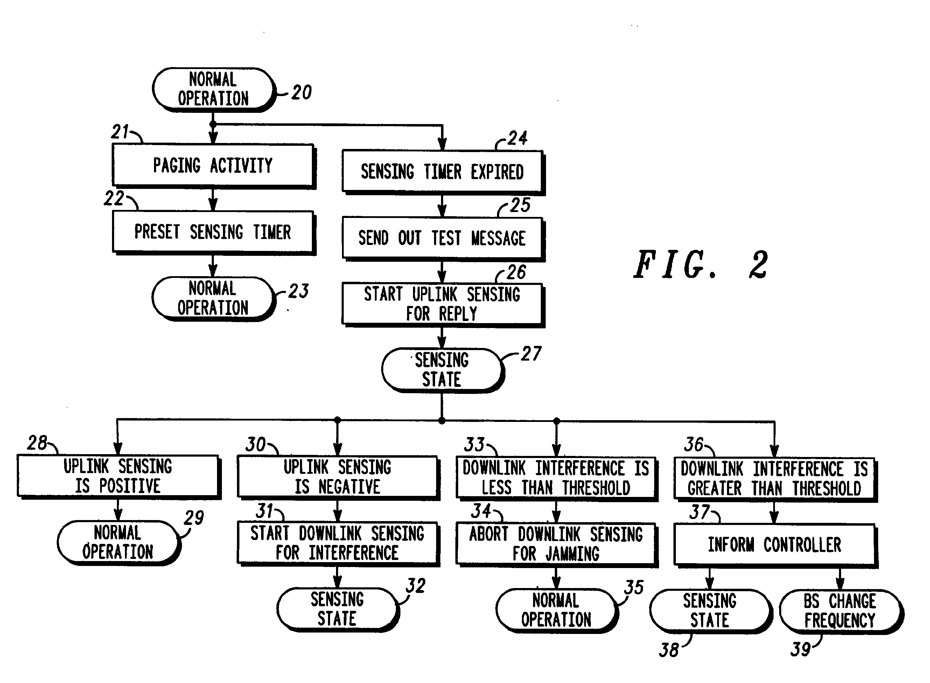

Operation of the system 1 is carried out in accordance with method embodying the invention according to the second aspect described earlier. Further details of the operational method will now be described with reference to Figure 2.

As seen in Figure 2 the various labelled boxes represent states of the base transceiver or BS 3. At box 20 normal activity is occurring. A normal broadcast or paging activity occurs at box 21. This causes presetting of a sensing timer within the processor 13 and normal operation continues at box 23. A period to begin the interference detection mode or sensing state begins at box 24 when the period set by starting the timer of the processor 13 expires. The BS 3 sends out a test message at box 25. The BS may first sense that there is no incoming signal activity at its receiver 11 before applying the sending step as indicated at box 25. The BS sets its receiver 11 and processor 13 to start uplink sensing for a response signal from the MS 5 (or other MS) as a result of receipt by the MS 5 of the test message. This is indicated at box 26. As a result the BS 3 is in a sensing state as shown at box 27.

If a response signal is detected as at box 28, normal operation resumes as indicated at box 29. If the uplink sensing result is negative, i.e. no response signal from an MS is detected, as indicated at box 30, downlink sensing for interference is begun as indicated at box 31. The processor 13 switches the BS 3 to tune to the receiver 11 to the downlink channel frequency of the transmitter 9 and the receiver 11 and processor 1 are set to detect what signals are present on the downlink channel frequency. The BS 3 thus continues in the interference sensing state as indicated at box 32.

If downlink interference above a threshold is not detected by the receiver 11 and processor 13, the processor 13 issues a sensing abort signal as indicated at box 34 and the processor 13 issues a signal to continue normal operation as indicated at box 35.

If however downlink interference above a threshold is detected by the receiver 11 and processor 13 as indicated at box 36, the controller 7 is informed as indicated at box 37 by the processor 13 sending an interference detection signal as described earlier. The sensing state continues as indicated at box 38. The controller 7 may signal the processor 13 to change the operating frequency of the BS 3 as indicated at box 39.

## Claims

1. A base transceiver (9, 11) for use in radio communication with distant transceiver units (5), the base transceiver being operable to send to the distant transceiver units a test signal to test whether the test signal is received by the distant transceiver units, **characterised in that** the base transceiver (9,11,13) is operable to put itself periodically into an interference detection mode to detect for interference by jamming of a downlink radio transmission from the base transceiver and actively to take part in the interference detection mode by being operable: (i) to generate and send on a control channel by polling to all mobile stations camped on the control channel a test signal which the mobile stations are programmed to recognise and respond to; (ii) to sense whether or not a response signal is received from any of the mobile stations in response to receipt of the test signal; and (iii) if no response signal is detected, optionally after further investigation, to generate an interference detection signal to indicate that interference to the downlink transmission has been detected.

2. A base transceiver according to claim 1 and which is incorporated in a base transceiver station (3).

3. A base transceiver according to claim 1 or claim 2 and which is part of a cellular network including a plurality of base transceiver stations and a network controller (7).

4. A base transceiver according to any one of the preceding claims and wherein the base transceiver includes a processor which is operable periodically to initiate and to take part in the interference detection mode.

5. A base transceiver according to any one of the preceding claims and wherein the period between the end of one interference detection mode and the beginning of steps to apply another interference detection mode is configurable and is selected according to conditions of use of the transceiver.

6. A base transceiver according to any one of the preceding claims and which is operable to detect a time interval when there is no incoming signal from the distant transceiver(s) on an uplink channel and to initiate the interference detection mode in such a detected time interval.

7. A base transceiver according to any one of the preceding claims and wherein the base transceiver includes means for sensing a response signal sent by a distant transceiver in response to its test signal.

8. A base transceiver according to claim 7 and wherein the means for sensing is operable to detect whether a signal is received after an expected response time.

9. A base transceiver according to claim 7 or claim 8 and wherein the means for sensing is operable to detect whether received signal energy is above a threshold energy.

10. A base transceiver according to any one of claims 7 to 9 and wherein the means for sensing is operable to detect the response signal as a coded signal.

11. A base transceiver according to any one of the preceding claims and which is operable to detect in its interference detection mode when a response signal is not received, if one of the following possible conditions applies: (i) the downlink transmitter has a fault causing noise in the downlink transmission; (ii) the downlink transmission has been subject to interference; and (ii) no distant transceiver has received the transmitted test signal.

12. A base transceiver according to claim 11 and which is operable to distinguish between the said possible conditions by issuing an auxiliary control signal to a receiver to initiate identification of the interference level on the downlink channel.

13. A base transceiver according to claim 11 or claim 12 and wherein the transceiver is operable to send the auxiliary control signal to a receiver which comprises an auxiliary interference detection unit provided in a location to detect transmitted signals from the base transceiver.

14. A base transceiver according to claim 12 or claim 13 and wherein the said receiver comprises part of the base transceiver itself, the receiver on receiving the auxiliary control signal being operable to be tuned to the frequency of the downlink channel.

15. A base transceiver according to claim 14 and wherein the receiver is operable to detect during a time interval when no transmission in the downlink channel is made by the base transceiver whether a received signal or noise above a given threshold constituting interference is received by the receiver.

16. A base transceiver according to claim 15 and wherein the receiver is operable to detect whether substantial noise is present on the transmission in the downlink channel.

17. A base transceiver according to any one of the preceding claims and wherein the transceiver is operable to send an interference detection signal to a system controller.

18. A base transceiver according to claim 17 and wherein the transceiver is operable in response to a control signal from the system controller sent in response to receipt of the interference detection signal to change one of its operating parameters to avoid the apparent interference.

19. A base transceiver according to claim 18 and which is operable to change its downlink channel to a different operating frequency.

20. A base transceiver according to any one of the preceding claims and which operates using a time division multiple access (TDMA) protocol.

21. A base transceiver according to claim 20 which operates according to TETRA (Terrestrial Trunked Radio) standards.

22. A base transceiver according to claim 21 and wherein the sent test signal and the received response signal are sent in Layer 2 control signalling of TETRA standards.

23. A method of operation of a system for radio communication between a base transceiver according to any one of the claims 1 to 22 and one or more mobile stations, wherein the base transceiver puts itself periodically into an interference detection mode to detect for interference by jamming of a downlink radio transmission from the base transceiver and actively takes part in the interference detection mode by applying the following steps: (i) sending on a control channel by polling to all mobile stations camped on the control channel a test signal which the mobile stations are programmed to recognise and respond to; (ii) sensing whether or not a response signal is received from any of the mobile stations in response to receipt of the test signal; and (iii) if no response signal is detected, optionally after further investigation, generating an interference detection signal to indicate that interference to the downlink transmission has been detected.

24. A method according to claim 23 wherein at least one of the mobile stations is camped on the control channel, receives the test signal, is programmed to recognise and respond to the test signal and sends a response signal on an uplink channel in response to the test signal.

25. A mobile station for use as the mobile station in the method according to claim 24.

26. A mobile station according to claim 25 and which operates according to TETRA (Terrestrial Trunked Radio) standards.

27. A mobile station according to claim 26 and wherein the sent test signal received by the mobile station and the response signal generated and sent thereby are in Layer 2 control signalling of TETRA standards.

## Patentansprüche

1. Basistransceiver (9, 11) zur Verwendung in einer Funkkommunikation mit entfernten Transceivereinheiten (5), wobei der Basistransceiver betreibbar ist, um den entfernten Transceivereinheiten ein Prüfsignal zu senden, um zu prüfen, ob das Prüfsignal durch die entfernten Transceivereinheiten empfangen wird, **dadurch gekennzeichnet, dass** der Basistransceiver (9, 11, 13) betreibbar ist, um sich selbst periodisch in eine Störungserfassungsbetriebsart zu versetzen, um eine Störung durch Stören einer Downlink-Funkübertragung von dem Basistransceiver zu erfassen und aktiv an der Störungserfassungsbetriebsart teilzuhaben, **dadurch**, dass er betreibbar ist, um (i) ein Prüfsignal zu erzeugen und auf einem Steuerkanal durch Polling an alle Mobilstationen zu senden, die auf dem Steuerkanal lagern ("camped on"), wobei die Mobilstationen programmiert sind, dieses zu erkennen und darauf zu reagieren; (ii) um zu erfassen, ob ein Antwortsignal von irgend einer der Mobilstationen in Reaktion auf einen Empfang des Prüfsignals empfangen wird oder nicht; und (iii), wenn kein Antwortsignal erfasst wird, optional nach einer weiteren Untersuchung, um ein Störungserfassungssignal zu erzeugen, um anzuzeigen, dass eine Störung der Downlink-Übertragung erfasst worden ist.

2. Basistransceiver gemäß Anspruch 1, der in einer Basistransceiverstation (3) eingebaut ist.

3. Basistransceiver gemäß Anspruch 1 oder Anspruch 2, der Teil eines zellularen Netzwerkes ist, das eine Mehrzahl von Basistransceiverstationen und eine Netzwerksteuerung (7) umfasst.

4. Basistransceiver gemäß einem der vorangehenden Ansprüche, wobei der Basistransceiver einen Prozessor umfasst, der periodisch betreibbar ist, um die Störungserfassungsbetriebsart zu initiieren und an ihr teilzuhaben.

5. Basistransceiver gemäß einem der vorangehenden Ansprüche, wobei die Periode zwischen dem Ende der einen Störungserfassungsbetriebsart und dem Beginn von Schritten, um eine andere Störungserfassungsbetriebsart anzuwenden, konfigurierbar ist und entsprechend Bedingungen einer Verwendung des Transceivers ausgewählt wird.

6. Basistransceiver gemäß einem der vorangehenden Ansprüche, der betreibbar ist, um ein Zeitintervall zu erfassen, in dem es kein ankommendes Signal von dem (den) entfernten Transceiver(n) auf einem Uplink-Kanal gibt, und die Störungserfassungsbetriebsart in einem solchen erfassten Zeitintervall zu initiieren.

7. Basistransceiver gemäß einem der vorangehenden Ansprüche, wobei der Basistransceiver ein Mittel zum Erfassen eines Antwortsignals umfasst, das durch einen entfernten Transceiver in Reaktion auf sein Prüfsignal gesendet wird.

8. Basistransceiver gemäß Anspruch 7, wobei das Mittel zum Erfassen betreibbar ist, um zu erfassen, ob ein Signal nach einer erwarteten Antwortzeit empfangen wird.

9. Basistransceiver gemäß Anspruch 7 oder Anspruch 8, wobei das Mittel zum Erfassen betreibbar ist, um zu erfassen, ob eine empfangene Signalenergie über einer Schwellenenergie liegt.

10. Basistransceiver gemäß einem der Ansprüche 7 bis 9, wobei das Mittel zum Erfassen betreibbar ist, um das Antwortsignal als ein codiertes Signal zu erfassen.

11. Basistransceiver gemäß einem der vorangehenden Ansprüche, der betreibbar ist, um in seiner Störungserfassungsbetriebsart zu erfassen, wann ein Antwortsignal nicht empfangen wird, wenn eine der folgenden möglichen Bedingungen zutrifft: (i) der Downlink-Sender hat einen Defekt, der ein Rauschen in der Downlink-Übertragung erzeugt; (ii) die Downlink-Übertragung ist Gegenstand einer Störung gewesen; und (iii) kein entfernter Transceiver hat das übertragene Prüfsignal empfangen.

12. Basistransceiver gemäß Anspruch 11, der betreibbar ist, um durch Ausgeben eines Hilfssteuersignals an einen Empfänger, um eine Identifizierung des Störungspegels auf dem Downlink-Kanal zu initiieren, zwischen den möglichen Bedingungen zu unterscheiden.

13. Basistransceiver gemäß Anspruch 11 oder Anspruch 12, wobei der Transceiver betreibbar ist, um das Hilfssteuersignal an einen Empfänger zu senden, der eine Hilfsstörungserfassungseinheit umfasst, die an einem Standort zur Verfügung gestellt wird, um übertragene Signale von dem Basistransceiver zu erfassen.

14. Basistransceiver gemäß Anspruch 12 oder Anspruch 13, wobei der Empfänger einen Teil des Basistransceivers selbst umfasst, wobei der Empfänger bei einem Empfangen des Hilfssteuersignals betreibbar ist, um auf die Frequenz des Downlink-Kanals eingestellt zu werden.

15. Basistransceiver gemäß Anspruch 14, wobei der Empfänger betreibbar ist, um während eines Zeitintervalls, in dem durch den Basistransceiver keine Übertragung in dem Downlink-Kanal vorgenommen wird, zu erfassen, ob ein empfangenes Signal oder Rauschen über einem gegebenen Schwellenwert, das eine Störung darstellt, durch den Empfänger empfangen wird.

16. Basistransceiver gemäß Anspruch 15, wobei der Empfänger betreibbar ist, um zu erfassen, ob ein wesentliches Rauschen auf der Übertragung in dem Downlink-Kanal vorhanden ist.

17. Basistransceiver gemäß einem der vorangehenden Ansprüche, wobei der Transceiver betreibbar ist, um ein Störungserfassungssignal an eine Systemsteuerung zu senden.

18. Basistransceiver gemäß Anspruch 17, wobei der Transceiver betreibbar ist, um in Reaktion auf ein Steuersignal von der Systemsteuerung, das in Reaktion auf einen Empfang des Störungserfassungssignals gesendet wird, einen seiner Betriebsparameter zu ändern, um die offensichtliche Störung zu vermeiden.

19. Basistransceiver gemäß Anspruch 18, der betreibbar ist, um seinen Downlink-Kanal zu einer anderen Betriebsfrequenz zu ändern.

20. Basistransceiver gemäß einem der vorangehenden Ansprüche, der unter Verwendung eines TDMA-Protokolls arbeitet (TDMA = Mehrfachzugriff im Zeitmultiplex).

21. Basistransceiver gemäß Anspruch 20, der gemäß TETRA-Standards arbeitet (TETRA = Erdbündelfunk).

22. Basistransceiver gemäß Anspruch 21, wobei das gesendete Prüfsignal und das empfangene Antwortsignal in der Schicht 2-Steuersignalisierung von TETRA-Standards gesendet werden.

23. Verfahren zum Betreiben eines Systems zur Funkkommunikation zwischen einem Basistransceiver gemäß einem der Ansprüche 1 bis 22 und einer oder mehreren Mobilstationen, wobei sich der Basistransceiver selbst periodisch in eine Störungserfassungsbetriebsart versetzt, um eine Störung durch Stören einer Downlink-Funkübertragung von dem Basistransceiver zu erfassen und aktiv an der Störungserfassungsbetriebsart teilhat, **dadurch**, dass er die folgenden Schritte anwendet: (i) Senden eines Prüfsignals auf einem Steuerkanal durch Polling an alle Mobilstationen, die auf dem Steuerkanal lagern, wobei die Mobilstationen programmiert sind, dieses zu erkennen und darauf zu reagieren; (ii) Erfassen, ob ein Antwortsignal von irgend einer der Mobilstationen in Reaktion auf einen Empfang des Prüfsignals empfangen wird oder nicht; und (iii) wenn kein Antwortsignal erfasst wird, optional nach einer weiteren Untersuchung, Erzeugen eines Störungserfassungssignals, um anzuzeigen, dass eine Störung der Downlink-Übertragung erfasst worden ist.

24. Verfahren gemäß Anspruch 23, wobei mindestens eine der Mobilstationen den Steuerkanal erwartet, das Prüfsignal empfängt, programmiert ist, um das Prüfsignal zu erkennen und darauf zu reagieren, und ein Antwortsignal auf einem Uplink-Kanal in Reaktion auf das Prüfsignal sendet.

25. Mobilstation zur Verwendung als die Mobilstation in dem Verfahren gemäß Anspruch 24.

26. Mobilstation gemäß Anspruch 25, die gemäß TETRA-Standards arbeitet (TETRA = Erdbündelfunk).

27. Mobilstation gemäß Anspruch 26, wobei das gesendete Prüfsignal, das durch die Mobilstation empfangen wird, und das Antwortsignal, das **dadurch** erzeugt und gesendet wird, in der Schicht-2-Steuersignalisierung von TETRA-Standards gesendet werden.

## Revendications

1. Emetteur-récepteur de base (9, 11) pour une utilisation au niveau d'une communication radio avec des unités d'émetteur-récepteur à distance (5), l'émetteur-récepteur de base pouvant fonctionner pour envoyer sur les unités d'émetteur-récepteur à distance un signal de test pour tester si oui ou non le signal de test est reçu par les unités d'émetteur-récepteur à distance, **caractérisé en ce que** l'émetteur-récepteur de base (9, 11, 13) peut fonctionner pour se placer lui-même périodiquement dans un mode de détection d'interférence pour détecter une interférence par brouillage intentionnel d'une transmission radio de liaison descendante en provenance de l'émetteur-récepteur de base et pour prendre part de manière active au mode de détection d'interférence en pouvant fonctionner : (i) pour générer et envoyer sur un canal de commande en interrogeant toutes les stations mobiles qui campent sur le canal de commande un signal de test que les stations mobiles sont programmées pour reconnaître et auquel elles sont programmées pour répondre ; (ii) pour détecter si oui ou non un signal de réponse est reçu depuis l'une quelconque des stations mobiles en réponse à la réception du signal de test ; et (iii) si aucun signal de réponse n'est détecté, en option après une investigation supplémentaire, pour générer un signal de détection d'interférence afin d'indiquer qu'une interférence par rapport à la transmission de liaison descendante a été détectée.

2. Emetteur-récepteur de base selon la revendication 1 et qui est incorporé dans une station d'émetteur-récepteur de base (3).

3. Emetteur-récepteur de base selon la revendication 1 ou 2 et qui est une parte d'un réseau cellulaire incluant une pluralité de stations d'émetteur-récepteur de base et un contrôleur de réseau (7).

4. Emetteur-récepteur de base selon l'une quelconque des revendications précédentes et dans lequel l'émetteur-récepteur de base inclut un processeur qui peut fonctionner de manière périodique pour initier un mode de détection d'interférence et pour y prendre part.

5. Emetteur-récepteur de base selon l'une quelconque des revendications précédentes et dans lequel la période entre la fin d'un mode de détection d'interférence et le début d'étapes pour appliquer un autre mode de détection d'interférence peut être configurée et est sélectionnée conformément à des conditions d'utilisation de l'émetteur-récepteur.

6. Emetteur-récepteur de base selon l'une quelconque des revendications précédentes et qui peut fonctionner pour détecter un intervalle temporel lorsqu'il n'y a pas de signal arrivant en provenance de l'émetteur-récepteur ou des émetteurs-récepteurs à distance sur un canal de liaison montante et pour initier le mode de détection d'interférence dans un tel intervalle temporel détecté.

7. Emetteur-récepteur de base selon l'une quelconque des revendications précédentes et dans lequel l'émetteur-récepteur de base inclut un moyen pour détecter un signal de réponse qui est envoyé par un émetteur-récepteur à distance en réponse à son signal de test.

8. Emetteur-récepteur de base selon la revendication 7 et dans lequel le moyen de détection peut fonctionner pour détecter si oui ou non un signal est reçu après un temps de réponse attendu.

9. Emetteur-récepteur de base selon la revendication 7 ou la revendication 8 et dans lequel le moyen de détection peut fonctionner pour détecter si oui ou non une énergie de signal reçu est au-delà d'une énergie de seuil.

10. Emetteur-récepteur de base selon l'une quelconque des revendications 7 à 9 et dans lequel le moyen de détection peut fonctionner pour détecter le signal de réponse en tant que signal codé.

11. Emetteur-récepteur de base selon l'une quelconque des revendications précédentes et qui peut fonctionner pour détecter dans son mode de détection d'interférence lorsqu'un signal de réponse n'est pas reçu si l'une des conditions possibles qui suivent s'applique : (i) l'émetteur de liaison descendante présente une défaillance qui génère un bruit au niveau de la transmission de liaison descendante ; (ii) la transmission de liaison descendante a été soumise à une interférence ; (iii) aucun émetteur-récepteur à distance n'a reçu le signal de test émis.

12. Emetteur-récepteur de base selon la revendication 11 et qui peut fonctionner pour effectuer un distinguo entre lesdites conditions possibles en délivrant un signal de commande auxiliaire sur un récepteur afin d'initier une identification du niveau d'interférence sur le canal de liaison descendante.

13. Emetteur-récepteur de base selon la revendication 11 ou 12 et dans lequel l'émetteur-récepteur peut fonctionner pour envoyer le signal de commande auxiliaire sur un récepteur qui comprend une unité de détection d'interférence auxiliaire qui est prévue au niveau d'une localisation pour détecter des signaux transmis en provenance de l'émetteur-récepteur de base.

14. Emetteur-récepteur de base selon la revendication 12 ou 13 et dans lequel ledit récepteur comprend une partie de l'émetteur-récepteur de base lui-même, et le récepteur, suite à la réception du signal de commande auxiliaire, peut fonctionner pour être accordé sur la fréquence du canal de liaison descendante.

15. Emetteur-récepteur de base selon la revendication 14 et dans lequel le récepteur peut fonctionner pour détecter, pendant un intervalle temporel lorsque aucune transmission dans le canal de liaison descendante n'est réalisée par l'émetteur-récepteur de base, si oui ou non un signal reçu ou un bruit au-delà d'un seuil donné constituant une interférence est reçu par le récepteur.

16. Emetteur-récepteur de base selon la revendication 15 et dans lequel le récepteur peut fonctionner pour détecter si oui ou non un bruit substantiel est présent lors de la transmission dans le canal de liaison descendante.

17. Emetteur-récepteur de base selon l'une quelconque des revendications précédentes et dans lequel l'émetteur-récepteur peut fonctionner pour envoyer un signal de détection d'interférence sur un contrôleur système.

18. Emetteur-récepteur de base selon la revendication 17 et dans lequel l'émetteur-récepteur peut fonctionner, en réponse à un signal de commande en provenance du contrôleur système qui est envoyé en réponse à la réception du signal de détection d'interférence, pour modifier l'un de ses paramètres de fonctionnement afin d'éviter l'interférence apparente.

19. Emetteur-récepteur de base selon la revendication 18 et qui peut fonctionner pour modifier son canal de liaison descendante sur une fréquence de fonctionnement différente.

20. Emetteur-récepteur de base selon l'une quelconque des revendications précédentes et qui fonctionne en utilisant un protocole d'accès multiple par division temporelle (TDMA).

21. Emetteur-récepteur de base selon la revendication 20, qui fonctionne conformément à des standards TETRA (radio par artères terrestres).

22. Emetteur-récepteur de base selon la revendication 21 et dans lequel le signal de test envoyé et le signal de réponse reçu sont envoyés au niveau d'une signalisation de commande de couche 2 de standards TETRA.

23. Procédé de fonctionnement d'un système pour une communication radio entre un émetteur-récepteur de base selon l'une quelconque des revendications précédentes 1 à 22 et une ou plusieurs stations mobiles, dans lequel l'émetteur-récepteur de base se place lui-même périodiquement dans un mode de détection d'interférence pour détecter une interférence par brouillage intentionnel d'une transmission radio de liaison descendante en provenance de l'émetteur-récepteur de base et prend part activement au mode de détection d'interférence en appliquant les étapes qui suivent : (i) envoi sur un canal de commande en interrogeant toutes les stations mobiles qui campent sur le canal de commande d'un signal de test que les stations mobiles sont programmées pour reconnaître et auquel elles sont programmées pour répondre ; (ii) détection de si oui ou non un signal de réponse est reçu depuis l'une quelconque des stations mobiles en réponse à la réception du signal de test ; et (iii) si aucun signal de réponse n'est détecté, en option après une investigation supplémentaire, génération d'un signal de détection d'interférence pour indiquer qu'une interférence vis-à-vis de la transmission de liaison descendante a été détectée.

24. Procédé selon la revendication 23, dans lequel au moins l'une des stations mobiles est en train de camper sur le canal de commande, elle reçoit le signal de test, elle est programmée pour reconnaître le signal de test et pour y répondre et elle envoie un signal de réponse sur un canal de liaison montante en réponse au signal de test.

25. Station mobile pour une utilisation en tant que station mobile selon le procédé selon la revendication 24.

26. Station mobile selon la revendication 25 et qui fonctionne conformément à des standards TETRA (radio à artères terrestres).

27. Station mobile selon la revendication 26 et dans laquelle le signal de test envoyé qui est reçu par la station mobile et le signal de réponse généré et envoyé ainsi sont au niveau d'une signalisation de commande de couche 2 de standards TETRA.
